# EUROPÄISCHE PATENTANMELDUNG

(11) **EP 2 405 031 A1**
(43) Veröffentlichungstag der Anmeldung: **11.01.2012**
(21) Anmeldenummer: 10006991.3
(22) Anmeldetag: 07.07.2010
(51) Int. Cl.: C23C 22/12, C23C 22/80, C23C 22/82, C25D 13/20

(54) **Verfahren zur Beschichtung von Formkörpern sowie beschichteter Formkörper**

(71) Anmelder: Koch, Mattthias, 59969 Bromskirchen (DE)
(72) Erfinder: Koch, Mattthias, 59969 Bromskirchen (DE)
(74) Vertreter: Metten, Karl-Heinz

(57) **Zusammenfassung**

Die vorliegende Erfindung umfasst ein Verfahren zur Beschichtung von Formkörpern, enthaltend Kupfer oder Kupferlegierungen, oder von Formkörpern mit einer Beschichtung, enthaltend Kupfer oder Kupferlegierungen, umfassend, in dieser Abfolge, die Schritte: a) Zurverfügungstellung eines Formkörpers, enthaltend Kupfer oder mindestens eine Kupferlegierung, oder eines Formkörpers mit mindestens einer Beschichtung, enthaltend Kupfer oder mindestens eine Kupferlegierung, h) Behandeln des Formkörpers mit mindestens einem wässrigen System, insbesondere mindestens einer wässrigen Lösung, mindestens eines Fluor-Komplexes mindestens eines Elements ausgewählt aus der Gruppe bestehend aus B, Si, Ti, Zr und Hf und/oder mit mindestens einem sauren wässrigen System, insbesondere einer sauren wässrigen Lösung, enthaltend mindestens eine Fluorsäure eines Elements ausgewählt aus der Gruppe bestehend aus B, Si, Ti, Zr und Hf, m) KTL-Behandlung des Formkörpers mit mindestens einem kathodisch abscheidbaren Elektrotauchlack (KTL-Beschichtungsschritt) und p) Tempern des Formkörpers. Die Erfindung umfasst des weiteren beschichtete Formkörper.

## Beschreibung

Die vorliegende Erfindung betrifft ein Verfahren zur Beschichtung von Formkörpern sowie insbesondere die nach dem erfindungsgemäßen Verfahren erhaltenen beschichteten Formkörper.

Formkörper aus Metall oder Kunststoff werden heutzutage in vielfältiger Form, Größe und Aufmachung eingesetzt. Metallische Formkörper sollen sich im Allgemeinen nicht nur durch ihre materialimmanente Formfestigkeit auszeichnen, sondern insbesondere über einen längeren Gebrauchszeitraum ein werthaltiges Erscheinungsbild liefern. Beispielsweise werden von metallischen Bauteilen regelmäßig ein hinreichender Glanz und/oder eine ausgeprägte Korrosionsbeständigkeit gefordert. Um diese Probleme zu lösen, sind vielfältigste Vorgehensweisen vorgeschlagen worden.

Beispielsweise gelangt man gemäß der EP 1 870 489 dadurch zu einem korrosionsbeständigen glanzbeschichteten Metallsubstrat, dass man mindestens eine metallische Kompositschutzschicht mit einer Dicke im Bereich von 20 nm bis 1 µm, enthaltend als erstes Metall Aluminum, Blei, Vanalium, Mangan, Magnesium, Eisen, Kobalt, Nickel, Kupfer, Titan oder Zink oder als erste Metalllegierung Messing, Bronze, Edelstahl oder eine Magnesium-, Titan-oder Aluminumlegierung und darin vorliegend mindestens ein Oxid, Doppeloxid, Oxid-Hydrat oder Oxihalogenid eines zweiten Metalls, ausgewählt aus der Gruppe, bestehend aus Zirkonium, Titan und Hafnium, auf einer metallischen Substratoberfläche aufbringt. Hierbei ist zunächst die Metallschicht aus dem ersten Metall oder der ersten Metalllegierung mittels PVD-Beschichtung, Aufdampfen mittels einens Elektronenstrahl-Verdampfers, Aufdampfen mittels eines Widerstandsverdampfers, Induktionsverdampfung, ARC-Verdampfung und/oder Kathodenzerstäubung auf der beschichtbaren Oberfläche des Substrats aufzutragen und anschließend mindestens ein Oxid, Doppeloxid, Oxid-Hydrat oder Oxihalogenid des zweiten Metalls in die Metallschicht durch Behandeln der Metallschicht mit einem wässrigen System, enthaltend mindestens eine Säure, ein Oxid, Doppeloxid, Oxid-Hydrat, Oxihaolgenid und/oder Salz des zweiten Metalls einzutragen. Hierbei ist die Metallschicht mit dem wässrigen System unter Druck zu beaufschlagen, und nach dem Aufbringen der Metallschicht und vor der Behandlung mit dem wässrigen System ist das Substrat einem Spülschritt mit VE-Wasser zu unterziehen.

Aus der DE 10 2005 059 314 A1 ist ein Verfahren zur Korrosionsschutzbehandlung von blanken Metalloberflächen bekannt, bei dem man diese Metalloberflächen mit einer sauren wässrigen Lösung eines Fluor-Komplexes mindestens eines Elements M ausgewählt aus der Gruppe B, Si, Ti, Zr und As in Kontakt bringt, mit Wasser spült und danach mit einem kathodisch abscheidbaren Elektrotauchlack beschichtet. Hierbei ist darauf zu achten, dass die wässrige Lösung nicht mehr als 1 mg/l organisches Polymer mit Allylamin- oder Vinylamin-Monomeren enthält, die wässrige Lösung zusätzlich mindestens eine weitere Komponente enthält, die ausgewählt ist aus Nitrationen, Kupferionen, Silberionen, Vanadium- oder Vanadationen, Wismutionen, Magnesiumionen, Zinkionen, Manganionen, Kobaltionen, Nickelionen, Zinnionen, Puffersystemen für den pH-Bereich von 2,5 bis 5,5, aromatischen Carbonsäuren mit mindestens zwei Gruppen, die Donoratome enthalten, oder Derivaten solcher Karbonsäuren, und Kieselsäurepartikel mit einer mittleren Teilchengröße unterhalb von 1 µm. Überdies hat die Metalloberfläche nach dem Kontakt mit der wässrigen Lösung des Fluor-Komplexes und vor der Beschichtung mit dem kathodisch abscheidbaren Elektrotauchlack nicht getrocknet zu werden, will man korrosionsgeschützte blanke Metalloberflächen erhalten.

Die DE 43 30 104 A1 betrifft ein Verfahren zur Behandlung von Oberflächen aus Stahl, verzinktem oder legierungsverzinktem Stahl und aluminiertem oder legierungsaluminiertem Stahl, vorzugsweise elektrolytisch verzinktem Stahl. Hierbei greift man auf wässrige, saure Phophatierlösungen zurück, die Zink-, Mangan- und Phosphationen sowie als Beschleuniger Hydroxylamin oder eine Hydroxylaminverbindung in jeweils vorgegebenen Konzentrationsbereichen enthalten. Diese Phosphatierlösung hat frei von Nickel-, Kobalt-, Kupfer-, Nitrit-und Oxo-Anionen von Halogenen zu sein.

Die DE 103 20 765 A1 beschreibt ein Verfahren zur Erzeugung einer Schicht auf einer metallischen Oberfläche zum Schutz vor Korrosion. Bei diesem Verfahren ist ein Beschichtungsmittel zu verwenden, das ein auf Siliziumverbindungen basierendes Sol, mindestens ein aminoalkylfunktionelles Alkoxysilan und/oder mindestens ein Umsetzungsprodukt der beiden vorangehend genannten Komponenten zu enthalten hat. Ferner ist dafür Sorge zu tragen, dass der Gesamtgehalt an aminoalkylfunktioneller Silankomponente in der Summe im Bereich von 0,01 bis 15 Gew.-% liegt.

Aus der DE 10 2008 007 977 A1 geht ein Verfahren zur Herstellung von zinkbeschichteten Nichteisenmetallbauteilen hervor, bei dem die Beschichtung durch ein Zinkdiffusionsverfahren unter Anwendung einer Zinkstaub-Mischung bei einer Temperatur im Bereich von 300 bis 600° C unter Bildung einer Zinkdiffusionsschicht aufzubringen ist.

Eine besonders glatte kathodische Elektrotauchlackbeschichtung erhält man gemäß der DE 10 2008 012 085 A1 mit Hilfe eines solchen Elektrotauchlacks, der mindestens ein in Wasser dispergierbares, kationische Gruppen enthaltendes organisches Bindemittel sowie 0,005 bis 0,5 Gew.-%, bezogen auf den Festkörpergehalt des kathodischen Elektrotauchlacks, eines organischen, vierwertigen Titan-, Zirkonium- oder Hafnium-Komplexes mit einer oder mehreren sauerstoffhaltigen Liganden aufweist.

Eine korrosionsgeschützte chromatierte Metalloberfläche, die sich durch eine sehr gute Haftung der Metallbeschichtung an dem Metallsubstrat auszeichnet, lässt sich gemäß der DE 38 33 119 C2 dadurch erhalten, dass man den Elektrotauchlack auf der Chromatierschicht direkt nach der Chromatierung ohne Zwischentrocknung aufbringt.

Elektrotauchlackbeschichtungen mit verbessertem Korrosionsschutz sind gemäß der DE 39 32 744 A1 im Wege solcher wässriger Überzugsmittel erhältlich, die neben üblichen wasserlöslichen oder wasserdispergierbaren elektrophoretisch abscheidbaren Bindemitteln und gegebenenfalls Vernetzungsmitteln, Lösemitteln, Pigmenten und sonstigen üblichen Additiven außerdem ein oder mehrere Zirkonaluminate enthalten.

Gängige Korrosionsschutzbeschichtungen für Metallsubstrate sind noch stets mit Nachteilen behaftet und lassen Wünsche offen. Vielfach werden nur Lösungen für sehr spezielle Substratkomponenten vorgeschlagen.

Der vorliegenden Erfindung lag daher die Aufgabe zugrunde, ein Verfahren zur Beschichtung von metallischen Formkörpern verfügbar zu machen, das nicht mehr mit den Nachteilen der aus dem Stand der Technik bekannten Systeme behaftet ist und insbesondere verbesserte Korrosionsschutzeigenschaften unter aggressiven Bedingungen über einen längeren Zeitraum sicherstellt.

Demgemäß wurde ein Verfahren zur Beschichtung von Formkörpern gefunden, umfassend die Schritte:
a) Zurverfügungstellung eines Formkörpers, enthaltend, oder bestehend aus, Kupfer oder mindestens eine(r) Kupferlegierung, oder eines Formkörpers mit mindestens einer Beschichtung, enthaltend, oder bestehend aus, Kupfer oder mindestens eine(r) Kupferlegierung,
h) Behandeln des Formkörpers mit mindestens einem wässrigen System, insbesondere mindestens einer wässrigen Lösung, mindestens eines Fluor-Komplexes mindestens eines Elements ausgewählt aus der Gruppe bestehend aus B, Si, Ti, Zr und Hf und/oder mit mindestens einem sauren wässrigen System, insbesondere einer sauren wässrigen Lösung, enthaltend mindestens eine Fluorsäure eines Elements ausgewählt aus der Gruppe bestehend aus B, Si, Ti, Zr und Hf,
m) KTL-Behandlung des Formkörpers mit mindestens einem kathodisch abscheidbaren Elektrotauchlack (KTL-Beschichtungsschritt) und
p) Aushärten der in Schritt m) erhaltenen Beschichtung, insbesondere Tempern des Formkörpers.

Erfindungsgemäß Verfahren kann optional um einen oder mehrere der nachfolgend genannten Verfahrensschritte ergänzt werden:
b) Phosphatierung, insbesondere Eisen- und/oder Zinkphosphatierung, des Formkörpers, und/oder
c) Spülen des Formkörpers mit mindestens einem wässrigen System und/oder Abtropfen, insbesondere Trocknen, des Formkörpers und/oder
d) Behandeln des Formkörpers mit mindestens einem wässrigen basischen System, insbesondere mindestens einer wässrigen basischen Lösung, und/oder mindestens einem wässrigen sauren System, insbesondere einer wässrigen sauren Lösung, vorzugsweise Behandeln des Formkörpers mit mindestens einer wässrigen basischen Lösung,
e) Spülen des Formkörpers mit mindestens einem wässrigen System und/oder Abtropfen, insbesondere Trocknen, des Formkörpers und/oder
f) Spülen des Formkörpers mit mindestens einem wässrigen System, insbesondere umfassend VE-Wasser, und/oder
g) Abtropfen, insbesondere Trocknen, des Formkörpers und/oder
i) Spülen des Formkörpers mit mindestens einem wässrigen System und/oder
j) Abtropfen, insbesondere Trocknen, des Formkörpers und/oder
k) Spülen des Formkörpers mit mindestens einem wässrigen System, insbesondere umfassend VE-Wasser, und/oder
1) Abtropfen, insbesondere Trocknen, des Formkörpers und/oder
n) Spülen des Formkörpers mit mindestens einem wässrigen System und/oder
o) Abtropfen, insbesondere Trocknen, des Formkörpers.

Die vorangehend gewählte alphabetische Kennzeichnung der einzelnen Verfahrensschritte wird im Sinne der vorliegenden Erfindung gezielt eingesetzt, um eine eindeutige Einordnung der einzelnen Schritte in die erfindungsgemäße Sequenz der zwingenden Verfahrensschritte a), d), h), m) und p) vornehmen zu können. So hat Verfahrensschritt b) auf Verfahrensschritt a) zu folgen, der Verfahrensschritt e) auf Verfahrensschritt d), der Verfahrensschritt g) hat vor Verfahrensschritt h) zu liegen und der Verfahrensschritt j) vor Verfahrensschritt k), usw. Selbstverständlich können zwischen benachbarten Verfahrensschritten (z.B. a) und b)) weitere Verfahrensschritte eingeschoben werden.

In einer besonders bevorzugten Ausgestaltung umfasst das erfindungsgemäße Verfahren, in dieser Abfolge, die Schritte a), b), d), h), m) und p) und insbesondere die Schritte a), b), c), d), f), g), h), k),1), m) und p).

Bevorzugte Formkörper oder Beschichtungen auf der Basis einer Kupferlegierung umfassen oder bestehen aus Messing, z.B. Messingguss.

Mit dem KTL-Behandlungsschritt m) kann eine Farbbeschichtung oder eine transparente Beschichtung erzeugt werden. Bei dem KTL-Behandlungsschritt m) kommt in einer Ausführungsform ein Epoxyharz, insbesondere ein kationischer Epoxyharz zum Einsatz. Der Elektrotauklack kann darüber hinaus Alkohole, Ether, Ketone und/oder alkoxylierte Alkohole und/oder Etherverbindungen enthalten. Exemplarisch seien 1-Methoxy-2-propanol, 2-ButoxyEthanol, Butylglycol, Polyethanol, Methylisobutylketone, 1-Phenoxypropan-2-ol, 2-Methoxy-1-propanol, N-Hexylglycol, Propylenglycolmonomethylether, Bis 2-(butoxyethoxy)-ethoxymethan und 3-Butoxy-2-propanol genannt. Diese Alkohol- und Etherverbindungen können in der Elektrotauchlackzusammensetzung in Mengen von 1 bis 15, vorzugsweise 3 bis 10 Gewichts-%, zugegen sein. In einer weiteren Ausführungsform verfügt die Tauchlackzusammensetzung über Alkylzinn- bzw. Alkylzinnoxidverbindungen wie die Dioctylzinnoxid.

Die Elektrotauklackzusammensetzung kann des weiteren mit Hilfe von Säuren, beispielsweise Amidosulphonsäure, Sulfaminsäure und/oder Essigsäure, auf einem geeigneten pH-Wert eingestellt werden.

In einer Ausführungsform kann die Elektrotauchlackzusammensetzung basieren auf einer Epoxyharzverbindung, beispielsweise in Mengen von 1 bis 30 Gewichts-%, vorzugsweise in Mengen von 4 bis 20 Gewichts-%, einer Säure, beispielsweise Essigsäure, zur Einstellung des pH-Wertes, vorzugsweise auf einen Bereich von 4 bis < 7, insbesondere im Bereich von 5 bis 6, und mindestens einem Bindemittel.

Die Elektrotauchlackbadzusammensetzung enthält in einer zweckmäßigen Ausgestaltung 20 bis 60 Gewichts-% an Wasser, insbesondere VE-Wasser, 20 bis 60 Gewichts-% an einem Bindemittel und 1 bis 20 Gewichts-% an einer Pigmentpaste.

Der KTL-Behandlungsschritt kommt z.B. für eine Zeitdauer von 30 Sekunden bis 5 Minuten, vorzugsweise für eine Zeitdauer von 1 bis 4 Minuten, zur Anwendung.

Es hat sich als zweckmäßig erwiesen, wenn die Elektrotauchlackzusammensetzung über einen längeren Zeitraum, beispielsweise von 24 bis 90 Stunden, vorzugsweise von 36 bis 80 Stunden, vor der eigentlichen Verwendung umgewälzt wird. Hierbei liegt die Badtemperatur in einer bevorzugten Ausgestaltung unterhalb von 35 °C.

In dem KTL-Behandlungsschritt kann beispielsweise eine Spannung im Bereich von 150 bis 400 V, vorzugsweise im Bereich von 180 bis 360 V, angelegt werden.

In einer bevorzugten Ausführungsform beträgt die Dauer des KTL-Behandlungsschritts, d. h. die Verweilzeit des Formteils in der Elektrotauchlackbadzusammensetzung unter KTL-Beschichtungsbedingungen etwa 1 bis 3 Minuten.

Von VE-Wasser im Sinne der vorliegenden Erfindung spricht man insbesondere dann, wenn die Leitfähigkeit < 25 µS.cm und die Anzahl der Bakterienkolonien < 1000/ml liegen.

In einer bevorzugten Ausgestaltung wird das beschichtete Formteil nach dem KTL-Behandlungsschritt mit einem wässrigen System, enthaltend Wasser, insbesondere VE-Wasser, sowie gegebenenfalls auch Phenoxypropanol, Methoxypropanol und/oder Hexyglycol, gespült.

Der Aushärtschritt p) geht vorzugsweise thermisch vonstatten, d.h. als Temperschritt. Alternativ kann der Aushärtschritt z.B. auch mit Hilfe von Katalysatoren chemisch aktiviert werden, wodurch der Aushärtschritt gegebenenfalls auch schon bei Raumtemperatur stattfinden kann. Der Aushärt- bzw. Temperschritt p) ist im Sinne der vorliegenden Erfindung dafür vorgesehen, die über Verfahrensschritt m) erhaltene KTL-Beschichtung zu trocknen bzw. auszuhärten. Dieser Temperschritt kann folglich auch einen Trocknungsschritt bzw. ein forciertes Trocknen darstellen. Bevorzugt wird das Tempern im Sinne der vorliegenden Erfindung bei oberhalb Raumtemperatur liegenden Temperaturen durchgeführt.

Der Aushärt- bzw. Temperschritt p) wird in einer Ausführungsform bei Temperaturen im Bereich von 150 bis 200 °C, vorzugsweise von 160 bis 190 °C vorgenommen. Die Zeitdauer des Aushärt- bzw. Temperschritts liegt üblicherweise im Bereich vom 2 bis 30 Minuten, vorzugsweise im Bereich 5 bis 20 Minuten. Beispielsweise kann man in einer Ausführungsvariante die Temperatur im Aushärt- bzw. Temperschritt für eine Zeitdauer von 10 Minuten im Bereich von 170°C bis 180°C, z.B. bei 175 °C halten. Auch ist es möglich, das beschichte Formteil z.B. für einen Zeitraum von 10 bis 60 Minuten bei einer Temperatur im Bereich von 200 bis 250 °C, beispielsweise im Bereich von 205 bis 230 °C, zu tempern. Besonders bevorzugt wird eine Tempertemperatur im Bereich von 130 bis 230 °C, vorzugsweise im Bereich von 140 bis 225 °C gewählt, hierbei hat es sich als vorteilhaft erwiesen, wenn in einer ersten Temperphase höhere Temperaturen, beispielsweise im Bereich von 160 bis 265 °C gewählt werden. Diese erste Temperphase kann sich z.B. über eine Zeitdauer bis zu 10 oder 15 Minuten erstrecken. In einer sich anschließenden, nachgeschalteten Temperphase liegt eine zweckmäßige Tempertemperatur im Bereich von 140 bis 190 °C, vorzugsweise im Bereich von 140 bis 185 °C. Der Übergang von der höheren zur niedrigeren Tempertemperatur kann kontinuierlich erfolgen, beispielsweise über einen Zeitraum von 5 bis 30 Minuten, vorzugsweise von 10 bis 25 Minuten.

Die mit dem erfindungsgemäßen Verfahren erhältlichen Beschichtungsdicken können in weiten Bereichen variiert werden und liegen gemäß einer Ausführungsform zweckmäßigerweise im Bereich von 5 bis 50 µm. Mit dem erfindungsgemäßen Verfahren werden z.B. ohne weiteres auch Beschichtungen mit einer Schichtdicke von 10 bis 35 µm erhalten. Beispielsweise lassen sich schon mit Schichtdicken im Bereich von 15 bis 30 µm sehr zufriedenstellende Resultate erzielen.

Die wässrige basische Lösung gemäß Verfahrensschritt d) umfasst vorzugsweise eine Alklalihydroxidlösung, beispielsweise eine Kaliumhydroxidlösung, oder stellt eine solche dar. Die wässrige basische Lösung kann ferner Silikate und/oder Komplexbildner enthalten. Der pH-Wert dieser wässrigen basischen Lösung liegt zweckmäßigerweise bei einem Wert von 9 oder darüber, insbesondere bei einem Wert von 10 oder darüber.

Die wässrige saure Lösung gemäß Verfahrensschritt h) enthält in einer bevorzugten Variante Hexafluorzirkonsäure, vorzugsweise in einer Menge im Bereich von 0,5 bis 10 Gew.-%.

Die der Erfindung zugrunde liegende Aufgabe wird des Weiteren gelöst durch einen beschichteten Formkörper umfassend ein Formkörpersubstrat, enthaltend oder bestehend aus Kupfer oder enthaltend mindestens eine oder bestehend aus mindestens einer Kupferlegierung, insbesondere Messing, oder umfassend mindestens eine Beschichtung, enthaltend oder bestehend aus Kupfer oder enthaltend mindestens eine oder bestehend aus mindestens einer Kupferlegierung, insbesondere Messing, und auf diesem Formkörpersubstrat vorliegend mindestens eine KTL-Beschichtung. Insbesondere wird die der Erfindung zugrunde liegende Aufgabe auch gelöst durch nach dem vorangehend geschilderten erfindungsgemäßen Verfahren erhältliche beschichtete Formkörper. Bevorzugte erfindungsgemäße Formkörper basieren auf mindestens einer Kupferlegierung, insbesondere Messing. Die KTL-Beschichtung dieser erfindungsgemäßen beschichteten Formkörper kann transparent oder farbig sein. Besonders bevorzugt sind solche beschichteten Formkörper, bei denen der Formkörper bzw. das Formkörpersubstrat vor der Aufbringung der KTL-Beschichtung mindestens einem Phosphatierschritt, insbesondere einer Eisen- und/oder Zinkphosphatierung, unterzogen worden ist.

Mit der vorliegenden Erfindung geht die überraschende Erkenntnis einher, dass metallische Formteile aus Kupfer oder Kupferlegierungen bzw. enthaltend Beschichtungen aus Kupfer oder Kupferlegierungen auch unter aggressiven Bedingungen keine signifikante Korrosion zeigen und insbesondere auch nicht zu Spannungsrisskorrosion neigen.

### Beispiele:

1) Das erfindungsgemäße beschichtete Kupferrohr wurde wie folgt erhalten:
   Das Kupferrohr wurde mit einer Kaliumhydroxydlösung bei einem pH-Wert von 10 für eine Zeitdauer von 10 Minuten bei einer Temperatur von 60° C behandelt (Tauchbad). Nach dem Spülen mit VE-Wasser durch aufeinander folgendes Eintauchen in zwei separate Tauchbecken wurde das Kupferrohr für etwa 2 Minuten bei etwa 30° C einer sauren wässrigen Hexaflurozirkonsäure-Lösung ausgesetzt (Tauchbad). Das hierbei erhaltene Kupferrohr wurde mit VE-Wasser gespült und in Gegenwart eines kationischen Epoxyelektrotauchlacks dem KTL-Beschichtungsschritt unterzogen. Das beschichtete Kupferrohr wurde mit Wasser gespült sowie getrocknet und anschließend dem vorangehend geschilderten Test unterzogen.
2) In entsprechender Weise wurden im Wesentlichen identische Kupferrohre den folgenden nicht erfindungsgemäßen Beschichtungsverfahren unterzogen.
   Ein gebogenes Kupferrohr mit einem Durchmesser von 18 mm, das in seinen Abmessungen dem Kupferrohr gemäß Beispiel 1) entsprach, wurde im Vakuum auf dem Fachmann bekannte Weise mit Titanhydrid beschichtet.
3) Ein gebogenes Kupferrohr mit einem Durchmesser von 18 mm, das in seinen Abmessungen dem Kupferrohr gemäß Beispiel 1) entsprach, wurde im Vakuum auf dem Fachmann bekannte Weise mit Titanoxid beschichtet.
4) Ein gebogenes Kupferrohr mit einem Durchmesser von 18 mm, das in seinen Abmessungen dem Kupferrohr gemäß Beispiel 1) entsprach, wurde im Vakuum auf dem Fachmann bekannte Weise mit Siliziumoxid beschichtet.
5) Die erhaltenen beschichteten Kupferrohre wurden wie im Folgenden geschildert dem Spannungsrisskammer-Test gemäß DIN 50916-2 ausgesetzt.

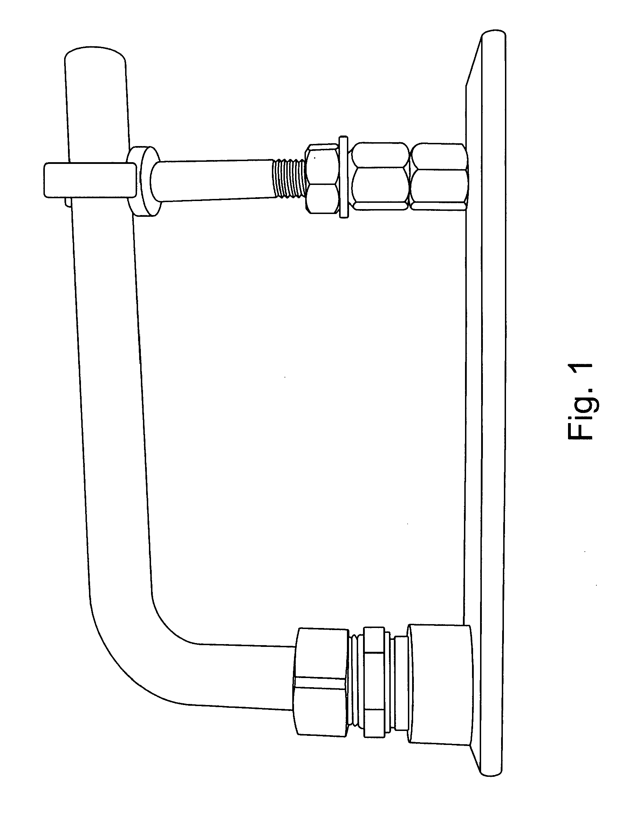

Das gebogene beschichtete Kupferrohr mit Bördel wurde nach erfolgter Beschichtung einem Spannungsrisskorrosionstest unterzogen. Hierfür wurde das beschichtete Kupferrohr mit einer Überwurfmutter an einem vertikalen Schraubansatz mit einer Kraft von 40 Nm befestigt. Das heißt die Kupferrohre wurden definiert angezogen. Der Aufbau ist in Figur 1 gezeigt. Das Kupferrohr wurde ausschließlich einer Biegebelastung, nicht jedoch auch einer aus der Verschraubung resultierenden Torsionsbelastung ausgesetzt. Die beschichteten Rohre wurden anschließend über einen Zeitraum von 30 Tagen, wie in Fig. 1 gezeigt, von außen gasförmigem Ammoniak gemäß dem Sprühkammer-Test nach DIN 50916-2 (Lösung B) ausgesetzt. Hierbei wurde das Rohr über eine Kolbenhubvorrichtung bei einer Länge von 150 mm kontinuierlich um 7 mm nach oben und unten ausgelenkt.

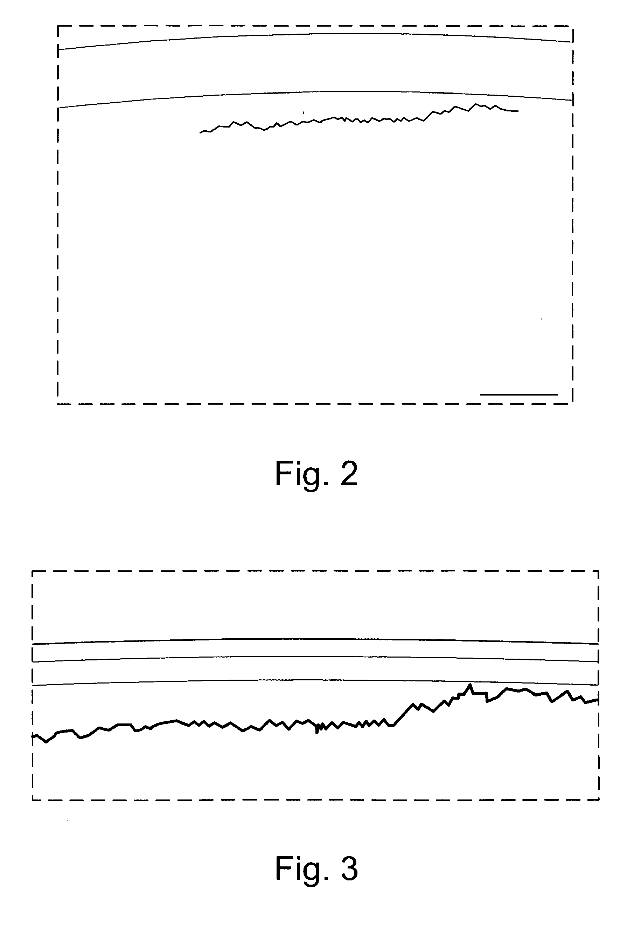

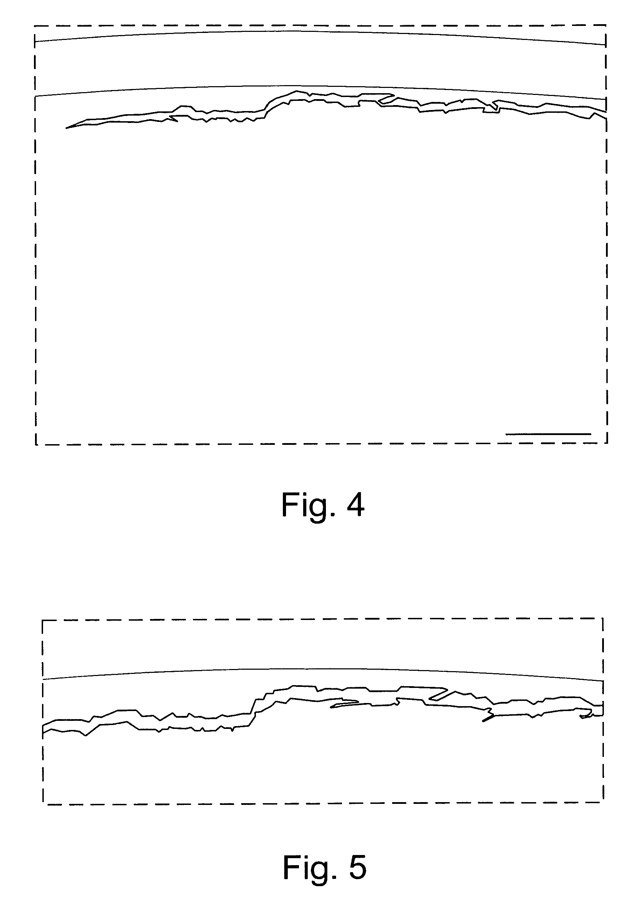

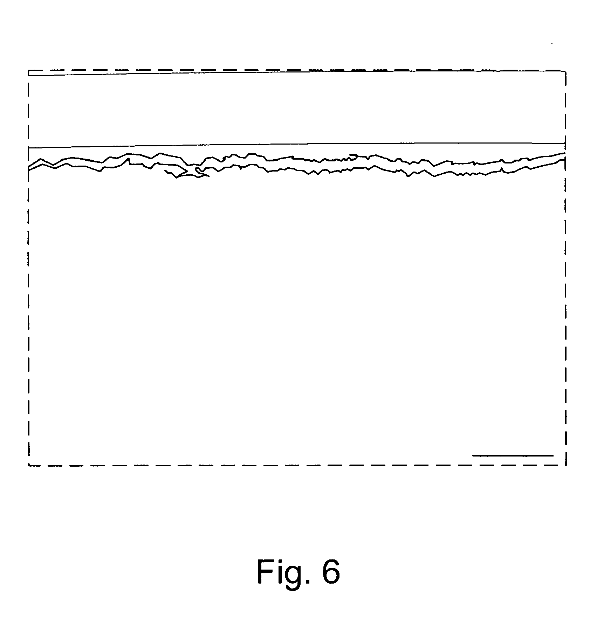

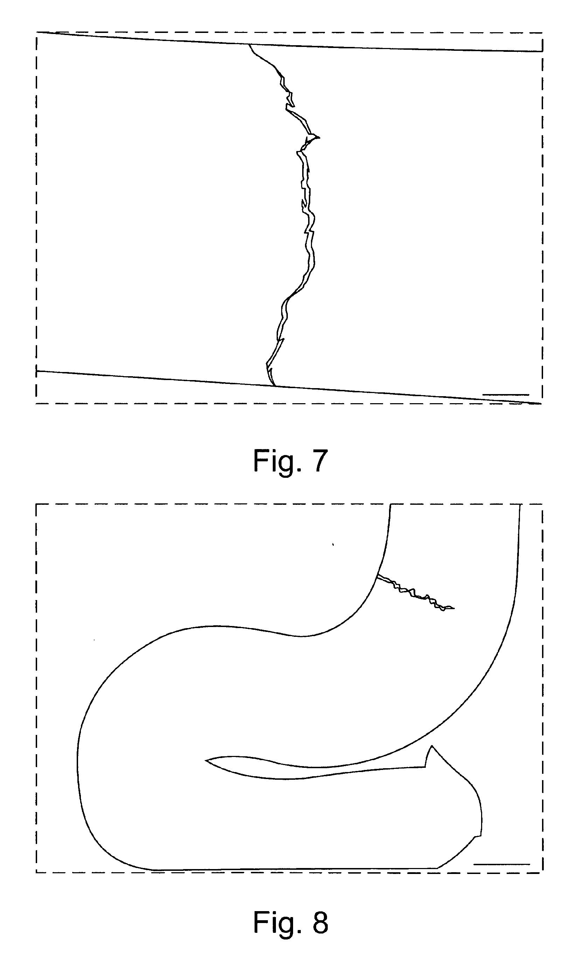

Während das erfindungsgemäße Kupferrohr keinerlei Korrosion zeigte, insbesondere auch keine Risse feststellbar waren, weder makroskopisch noch mittels Mikroskop im Schliffbild, war bei sämtlichen nicht erfindungsgemäßen beschichteten Rohren der Bördel angerissen. Bei dem mit Siliziumoxid beschichteten Kupferrohr war darüber hinaus der Rohrbogen angerissen. Die aufgefundenen Beschädigungen werden anhand der Figuren 2 bis 8 demonstriert:
- Figur 2: zeigt nach 30-tätiger Behandlung gemäß DIN 50916-2 eine photographische Wiedergabe des mit Titanhydrid beschichteten Kupferrohrs im Bereich des Bördels;
- Figur 3: zeigt eine Vergrößerung des in Figur 2 erkennbaren Risses;
- Figur 4: zeigt nach 30-tätiger Behandlung gemäß DIN 50916-2 eine photographische Wiedergabe eines mit Titanoxid beschichteten Kupferrohres im Bereich des Bördels;
- Figur 5: zeigt eine vergrößerte Darstellung des in Figur 4 erkennbaren Risses;
- Figur 6: zeigt eine photographische Wiedergabe des mit Siliziumoxid beschichteten Kupferrohrs im Bereich des Bördels nach 30-tätiger Behandlung gemäß DIN 50916-2;
- Figur 7: zeigt eine photographische Wiedergabe des mit Siliziumoxid beschichteten Kupferrohrs nach 30-tägiger Behandlung gemäß DIN 50916-2 im Bereich der 90°-Biegung des Kupferrohrs (siehe auch Pfeil in Figur 1); und
- Figur 8: zeigt ein Schliffbild des Korrosionsrisses gemäß Figur 7 in Querschnittsansicht.

Bei den erfindungsgemäßen Kupferrohren waren keinerlei Risse erkennbar.

Die in der vorstehenden Beschreibung, in den Ansprüchen sowie in den Zeichnungen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Verfahren zur Beschichtung von Formkörpern, enthaltend Kupfer oder Kupferlegierungen, oder von Formkörpern mit einer Beschichtung, enthaltend Kupfer oder Kupferlegierungen, umfassend, in dieser Abfolge, die Schritte:
a) Zurverfügungstellung eines Formkörpers, enthaltend Kupfer oder mindestens eine Kupferlegierung, oder eines Formkörpers mit mindestens einer Beschichtung, enthaltend Kupfer oder mindestens eine Kupferlegierung,
h) Behandeln des Formkörpers mit mindestens einem wässrigen System, insbesondere mindestens einer wässrigen Lösung, mindestens eines Fluor-Komplexes mindestens eines Elements ausgewählt aus der Gruppe bestehend aus B, Si, Ti, Zr und Hf und/oder mit mindestens einem sauren wässrigen System, insbesondere einer sauren wässrigen Lösung, enthaltend mindestens eine Fluorsäure eines Elements ausgewählt aus der Gruppe bestehend aus B, Si, Ti, Zr und Hf,
m) KTL-Behandlung des Formkörpers mit mindestens einem kathodisch abscheidbaren Elektrotauchlack (KTL-Beschichtungsschritt) und
p) Aushärten der in Schritt m) erhaltenen Beschichtung, insbesondere Tempern des Formkörpers.

2. Verfahren nach Anspruch 1, ferner umfassend die Schritte
b) Phosphatierung, insbesondere Eisen- und/oder Zinkphosphatierung, des Formkörpers und/oder
c) Spülen des Formkörpers mit mindestens einem wässrigen System und/oder Abtropfen, insbesondere Trocknen, des Formkörpers und/oder
d) Behandeln des Formkörpers mit mindestens einem wässrigen basischen System, insbesondere mindestens einer wässrigen basischen Lösung, und/oder mindestens einem wässrigen sauren System, insbesondere einer wässrigen sauren Lösung,
e) Spülen des Formkörpers mit mindestens einem wässrigen System und/oder Abtropfen, insbesondere Trocknen, des Formkörpers und/oder
f) Spülen des Formkörpers mit mindestens einem wässrigen System, insbesondere umfassend VE-Wasser, und/oder
g) Abtropfen, insbesondere Trocknen, des Formkörpers und/oder
i) Spülen des Formkörpers mit mindestens einem wässrigen System und/oder
j) Abtropfen, insbesondere Trocknen, des Formkörpers und/oder
k) Spülen des Formkörpers mit mindestens einem wässrigen System, insbesondere umfassend VE-Wasser, und/oder
1) Abtropfen, insbesondere Trocknen, des Formkörpers und/oder
n) Spülen des Formkörpers mit mindestens einem wässrigen System und/oder
o) Abtropfen, insbesondere Trocknen, des Formkörpers.

3. Verfahren nach Anspruch 1 oder 2, umfassend, in dieser Abfolge, die Schritte a), b), d), h), m) und p) und insbesondere die Schritte a), b), c), d), f), g), h), k),1), m) und p).

4. Verfahren nach einem der vorangehenden Ansprüche, **dadurch gekennzeichnet, dass** in dem KTL-Beschichtungsschritt m) eine Farbbeschichtung oder eine transparente Beschichtung erzeugt wird.

5. Verfahren nach einem der vorangehenden Ansprüche, **dadurch gekennzeichnet, dass** die Kupferlegierung Messing umfasst oder darstellt.

6. Verfahren nach einem der vorangehenden Ansprüche, **dadurch gekennzeichnet, dass** die wässrige basische Lösung eine Alkalihydroxidlösung, insbesondere Kaliumhydroxidlösung, umfasst oder darstellt.

7. Verfahren nach einem der vorangehenden Ansprüche, **dadurch gekennzeichnet, dass** der pH-Wert der wässrigen basischen Lösung ≥ 9, insbesondere ≥ 10, ist.

8. Verfahren nach einem der vorangehenden Ansprüche, **dadurch gekennzeichnet, dass** die wässrige saure Lösung als Fluorsäure Hexafluorzirkonsäure enthält.

9. Verfahren nach Anspruch 8, **dadurch gekennzeichnet, dass** die wässrige saure Lösung 0,5 bis 10 Gew.-% Hexafluorzirkonsäure enhält.

10. Verfahren nach einem der vorangehenden Ansprüche, **dadurch gekennzeichnet, dass** bei dem KTL-Beschichtungsschritt mindestens ein Epoxyharz, insbesondere ein kationisches Epoxyharz, verwendet wird.

11. Verfahren nach einem der vorangehenden Ansprüche, **dadurch gekennzeichnet, dass** die wässrige basische Lösung ferner Silikate und/oder Komplexbildner enthält.

12. Beschichteter Formkörper, erhältlich gemäß einem Verfahren nach einem der vorangehenden Ansprüche.

13. Beschichteter Formkörper nach Anspruch 12, **dadurch gekennzeichnet, dass** der Formkörper oder die Beschichtung auf Kupfer oder mindestens einer Kupferlegierung, insbesondere Messing, basiert.

14. Beschichteter Formkörper umfassend ein Formkörpersubstrat, enthaltend oder bestehend aus Kupfer oder enthaltend mindestens eine oder bestehend aus mindestens einer Kupferlegierung, insbesondere Messing, oder umfassend mindestens eine Beschichtung, enthaltend oder bestehend aus Kupfer oder enthaltend mindestens eine oder bestehend aus mindestens einer Kupferlegierung, insbesondere Messing, und auf diesem Formkörpersubstrat vorliegend mindestens eine KTL-Beschichtung.

15. Beschichteter Formkörper nach Anspruch 14, **dadurch gekennzeichnet, dass** das Formkörpersubstrat vor der Aufbringung der KTL-Beschichtung mindestens einem Phosphatierschritt, insbesondere einer Eisen- und/oder Zinkphosphatierung, unterzogen worden ist.
